# EUROPÄISCHE PATENTSCHRIFT

(11) **EP 1 378 108 B1**
(45) Veröffentlichungstag und Bekanntmachung des Hinweises auf die Patenterteilung: **28.10.2009**
(21) Anmeldenummer: 02740242.9
(22) Anmeldetag: 09.04.2002
(51) Int. Cl.: H04M 3/22

(54) **VERFAHREN ZUR DURCHFÜHRUNG VON ÜBERWACHUNGSMASSNAHMEN UND AUSKUNFTSERSUCHEN IN TELEKOMMUNIKATIONS - UND DATENNETZEN**
METHOD FOR CARRYING OUT MONITORING MEASURES AND INFORMATION SEARCHES IN TELECOMMUNICATION AND DATA NETWORKS WITH, FOR INSTANCE, INTERNET PROTOCOL (IP)
PROCEDE POUR METTRE EN OEUVRE DES MESURES DE SURVEILLANCE ET EFFECTUER DES DEMANDES DE RENSEIGNEMENT DANS DES RESEAUX DE TELECOMMUNICATION ET DE DONNEES A PROTOCOLE INTERNET (IP) PAR EXEMPLE

(30) Priorität: 10.04.2001 DE 10117998
(43) Veröffentlichungstag der Anmeldung: 07.01.2004
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2002/001309
(87) Internationale Veröffentlichungsnummer: WO 2002/085041

(56) Entgegenhaltungen:
- WO-A-00/56029
- WO-A-02/47353
- WO-A-99/17499

## Beschreibung

Die Erfindung betrifft ein Verfahren zur Durchführung von Überwachungsmaßnahmen und Auskunftsersuchen in Telekommunikations- und Datennetzen mit beispielsweise Internet-Protokoll (IP).nach dem Oberbegriff des Patentanspruchs 1.
Die Überwachung von Telekommunikationsdiensten ist in Deutschland gesetzlich geregelt. Die prinzipielle Verfahrensweise zur Durchführung von Teilnehmer-Überwachungsmaßnahmen in mobilen Telekommunikationsnetzen ist beispielsweise im ETSI-Standard GSM 03.33 (Tdoc SMG10 98 D047) beschrieben.

Paketorientierte Telekommunikationsnetze sind beispielsweise zellulare Mobilfunknetze nach dem GSM-Standard mit GPRS-Übertragungsverfahren (ETSI GSM 03.60). Im Gegensatz zu leitungsvermittelten Diensten werden hierbei die einzelnen Datenpakete mit Übertragungskontroll-Protokoll/Internet-Protokoll (Transmission Control Protocol/Internet Protocol TCP/IP gemäß Internet Engineering Task Force IETF-Standard RFC 793/RFC 791) einzeln im Netz übertragen. Somit kann bereits auf der Luftschnittstelle sowie im weiterführenden Netz eine Mehrfachnutzung mehrerer Kunden im Timesharing-Verfahren auf den gleichen Übertragungskanälen erfolgen.

Die übliche Zuordnung zwischen Datenübertragungskanal und Kommunikationsteilnehmer ist hier nicht mehr gegeben.
Da das im Internet verwendete TCP/IP heute mit Abstand den größten Verbreitungsgrad hat, andererseits protokoll- und teilnehmerbedingt große übertragungsfreie Zeiten und burstartige Datenübertragungszyklen vorhanden sind, kann die gemeinsame Nutzung von Übertragungskanälen durch mehrere Kunden zu größerer Wirtschaftlichkeit führen.

Eine transparente Nutzung eines Übertragungskanals pro Kunde für beispielsweise Internetdienste war im Mobilfunkbereich bisher ebenfalls möglich (GSM-Bearer-Services von 2,4 kbps bis 14,4 kbps), die Nutzung scheiterte jedoch weitgehend an den hohen Kosten. Vergleichbares gilt für die exklusive Nutzung mehrfach geketteter Kanäle (HSCSD) .

Ein ähnliches Verfahren wird beim Festnetz-Internet-Zugang genutzt. Systembedingt besitzt hier jeder Teilnehmer seine eigene Teilnehmeranschlußleitung und nutzt diese bis zur Vermittlungsstelle exklusiv. Dort wird der Internetverkehr jedoch über sog. Remote Access-Server (RAS-Server) ausgekoppelt und auf gemeinsam genutzten IP-Übertragungskanälen geführt. Diese Verfahrensweise (Ortsverbindung) spart Leitungskosten im Gegensatz zu einer leitungsgeführten Verbindung zu einem zentralen Übergang (Fernverbindung). Es wird im analogen Netz, im ISDN-Netz sowie bei den xDSL-Verfahren angewandt.

Bedingt durch diese Verfahren im Fest- oder Mobilfunknetz können Übertragungskosten eingespart werden. Die Zeitdauer der Einwahl zu einem Internet Service Provider ist daher nicht mehr der kostenbestimmende Faktor.

Im Mobilfunkbereich kann nicht auf eine vorhandene Kabelinfrastruktur zurückgegriffen werden. Daher sind die Kosten höher als im Festnetzbereich und erfordern zusätzliche Leistungsmerkmale als Nutzungsanreiz.

Eine Möglichkeit hierzu ist das Angebot eines Always connect/Always on-Dienstes. Durch dieses Verfahren ist der Kunde immer mit seinem Kommunikationspartner (z.B. Internet) verbunden und spart jeweils die Aktivierungs,-Einwahl-, Authentisierungs- und Adressierungsaufwand.
Im verkehrsfreien Zustand werden dabei kaum Netz-Resources belegt, so dass die Attraktivität des Netzes bei günstiger Kostensituation steigt.

Durch diese Verfahrensweise entstehen jedoch andere Probleme. Zur Kommunikation im öffentlichen Internet werden öffentliche IP-Adressen benötigt. Wenn die Connection Time keine nennenswerten Kosten verursacht, werden Millionen von Mobilfunk-Kunden diesen Service nutzen, so dass Millionen von IP-Adressen erforderlich sind.

Dem gegenüber sind weltweit kaum noch nennenswerte Adress-Kontingente bei den internationalen Verwaltungsinstitutionen (Toplevel Registry IANA/ICANN, bzw. Europa-Registry RIPE-NCC) erhältlich.
Um dennoch einen wettbewerbsfähigen Service anbieten zu können, muss daher ein Ausweg aus der IP-Adressproblematik gefunden werden. Es bieten sich Verfahren an, die öffentlichen IP-Adressen mehrfach zu nutzen (Multiplex, Timesharing etc.). Alle diese Verfahren besitzen jedoch prinzipbedingt die Funktionalität, dass eine Umsetzung der IP-Adressen an der Netzgrenze zwischen Telekommunikationsnetz und externem Netz, Internet etc. stattfinden muß. Die externe IP-Adresse (bei Network Address Translation NAT), oder der externe Sessionbezug (bei Proxy-Einsatz) ist in den Übertragungsprotokollen auf der Teilnehmerseite in diesen Fällen nicht enthalten.

Der teilnehmerbezogene Datenverkehr wird im Falle einer Überwachungsmaßnahme teilnehmernah (meist in der ersten Vermittlungsstelle) ausgekoppelt und als Kopie zu den entsprechenden Bedarfsträgern (Law Enforcement Agency LEA) geschickt. Bei dieser Verfahrensweise können beliebige Teilnehmeranschlüsse (hier Mobile Terminal MT) überwacht werden.

Ein Problem besteht jedoch dann, wenn eine netzexterne Einrichtung, beispielsweise ein Server im Internet, eine Teilnehmereinrichtung (Computer oder Telefon) eines ebenfalls an das Internet angeschlossenen Telekommunikations-oder Datennetzes etc. (hier stellvertretend als Observed Station OS bezeichnet) einer Überwachungsmassnahme unterliegt.

In diesem Fall kann es erforderlich sein, dass die Identität eines Kommunikationspartners im primären Telekommunikations- oder Datennetz ermittelt werden muss (Rückverfolgung). Wenn der betreffende Teilnehmer nicht ebenfalls einer Überwachungsmassnahme unterliegt, kann der Teilnehmer nur nachträglich (Auskunftsersuchen) ermittelt werden. Diese Verfahrensweise ist beispielsweise im Telefonverkehr üblich. Hier ist der Teilnehmer bei Angabe der betreffenden Telefonnummer ermittelbar, da die Kommunikationsbeziehungen (Telefonate) mit Rufnummernzuordnung sowie Zeit- und Datumsvermerk gespeichert werden.
Im Datenverkehr ist eine Teilnehmerermittlung ebenfalls möglich, falls der ISP des MT die Zugangsdaten (beispielsweise Internet-Adresse und Teilnehmerkennung) speichert.

Im besonderen Betrachtungsfall werden jedoch die kennzeichnenden Merkmale einer Internet-Verbindung (insbesondere IP-Adresse) im Access-Netzwerk des Telekommunikationsnetzes geändert, bzw. es handelt sich um dynamisch zugeordnete Daten. Diese werden in der Regel nicht gespeichert und ein Bezug zu den internen Kommunikationsparametern (netzinterne IP-Adresse, Telefonnummer o.ä.) ist nicht gegeben, bzw. kann nachträglich nicht ermittelt werden.

In diesen Fällen ist eine Rückverfolgung bei Auskunftsersuchen von Kommunikationsverbindungen zwecks Ermittlung der Teilnehmeridentität im Zuge von externen Überwachungsmaßnahmen im Internet oder in anderen Telekommunikationsnetzen über die eigene Netzgrenze sowohl aktuell, als auch nachträglich nicht möglich. Dies kann auch für interne Kommunikationsbeziehungen gelten, wenn beispielsweise auch die interne IP-Adresse dynamisch zugeordnet ist.

Die Umsetzung der gesetzlichen Anforderungen ist mit den bestehenden technischen Möglichkeiten nur sehr begrenzt und lückenhaft möglich, wodurch sich ein überwachungsfreier Raum für gesetzwidrige Handlungen ergibt.

Das nachveröffentlichte und prioritätsältere Dokument . WO 02/47353 A offenbart ein Verfahren zur Durchführung von Überwachungsmaßnahmen und Auskunftsersuchen in Telekommunikations- und Datennetzen, in denen Adressierungs- und Kommunikationsparameter die Herstellung und Aufrechterhaltung einer netzinternen oder netzexternen Kommunikation übernehmen und Adresskonvertierungseinrichtungen die Adressumsetzung oder eine Zuteilung von netzinternen oder netzexternen dynamischen Adressierungsdaten zu netzinternen Kommunikationsteilnehmern oder netzexternen Kommunikationsteilnehmern oder --einrichtungen durchführen. Hierbei werden die in den Adresskonvertierungseinrichtungen aktuell erzeugten Adressierung- und Kommunikationsparameter unter Hinzufügung von Zuweisungsparametern als Datensätze abgespeichert.

Der vorliegenden Erfindung liegt die Aufgabe zugrunde, ein Verfahren vorzuschlagen, auf dessen Basis eine erweiterte Überwachung beispielsweise von IP-basierenden Telekommunikations- und Datennetzen gemäß der gesetzlichen Richtlinien möglich ist, um die Überwachungslücke zu schließen, die dadurch entsteht, dass Adressen an der Netzgrenze zu anderen Telekommunikations- und Datennetzen (z.B. öffentliches Internet) geändert werden müssen und übergreifende Telekommunikations- und/oder Datenverbindungen bisher nicht vollständig observiert werden können, insbesondere nicht rückverfolgt werden können.

Gelöst wird diese Aufgabe durch die kennzeichnenden Merkmale des Patentanspruchs 1.

In den Unteransprüchen sind vorteilhafte Weiterbildungen der Erfindung beschrieben.

Durch die klare Zuordnung der extern und internen verwendeten Kommunikationsparametern bzw. Adressierungsparametern bis hin zur offiziellen eindeutigen Teilnehmererkennung (z. B. Teilnehmerrufnummer) und der dadurch eindeutigen Zuordnung des/der an einer Kommunikation beteiligten Teilnehmer in Verbindung der zentralen oder dezentralen Speicherung dieser Datensätze unter Hinzufügung von Zeit und Datum ist eine lückenlose Rückverfolgung aller Netzteilnehmer, die aktuell an einer Kommunikation teilnehmen oder in der Vergangenheit teilgenommen haben lückenlos möglich.

Die Erfindung wird unter Verwendung von Zeichnungsfiguren, die hier lediglich eine mögliche Ausführungsart am Beispiel des GPRS-Dienstes (General Packet Radio Service) in einem GSM-Netz (Global System for Mobile communications) in schematischer Darstellung beschreiben, erläutert, wobei sich anhand der Zeichnungsfiguren weitere Anwendungsgebiete und Ansprüche ergeben.

Die erfindungsgemäße Verfahrensweise ist dabei nicht auf die Anwendung in Mobilfunknetzen und nicht auf die Anwendung in diesem beispielhaften GSM/GPRS-Netz beschränkt.

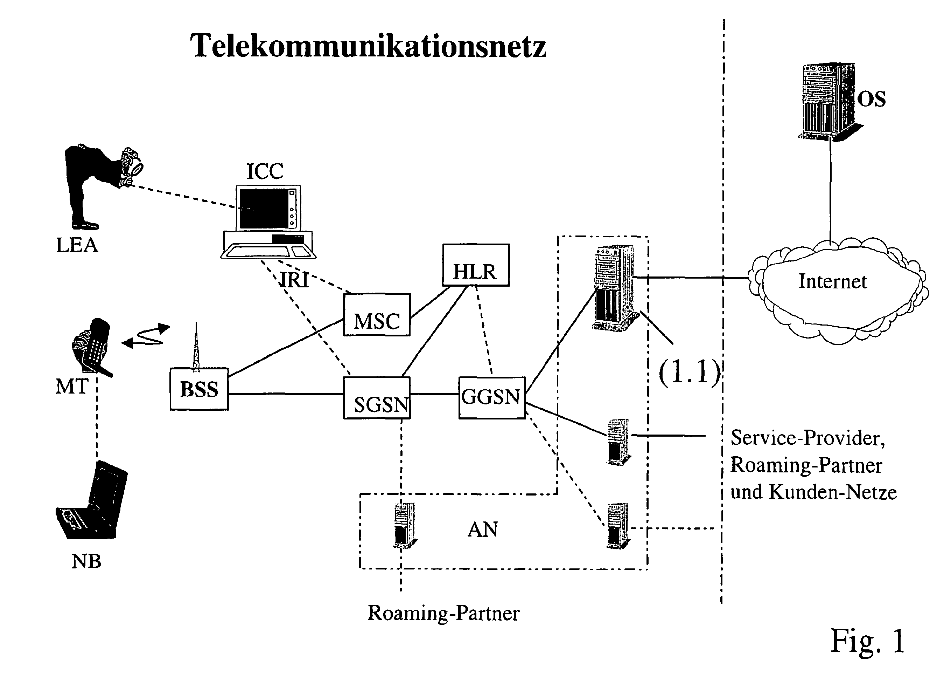

Fig. 1 zeigt die prinzipielle Verfahrensweise zur Überwachung von Teilnehmeranschlüssen im Mobilfunk-Bereich.

Die prinzipielle GPRS-Funktionalität ist beispielsweise in ETSI GSM 03.60 beschrieben. Ein Mobile Terminal (MT) kommuniziert in der Art mit dem Mobilfunknetz, dass sowohl Sprachverbindungen, als auch Datenverbindungen über das Base Station Subsystem BSS in das GSM-Netz ein-/ausgekoppelt werden.

Bei den aktuellen Netzen wird die Sprache mittels Mobile Switching Center MSC (ISDN-Vermittlungsstelle) weitergeführt, während die paketorientierten Daten über getrennte Netzkomponenten/Vermittlungskomponenten geführt werden.
Dabei erfolgt zunächst ein Verbindungsaufbau (GPRS Service Activation) zum SGSN (Switching GPRS Support Node). Dort wird der Teilnehmer authentisiert und der Verbindungswunsch samt Verbindungsberechtigung überprüft. Im positiven Fall wird ein PDP Context (Packed Data Protocol) zum GGSN (Gateway GPRS Support Node) aufgebaut.
Der GGSN ist im Prinzip ein IP-Router, der die Verbindung zum externen Netz herstellt.

Hierzu führt der GGSN fallspezifisch beispielsweise eine Authentisierung zu einem ISP (Internet Service Provider) mittels RADIUS-Prozedur durch (Remote Access Dial in User Service), wie sie im Festnetz vergleichbar bei der Einwahl zum ISP durchgeführt wird.
Anschließend erhält der GGSN die ISP-seitige IP-Adresse und übermittelt diese an das MT. In anderen Fällen ordnet der GGSN eine eigene öffentliche IP-Adresse aus dem eigenen Pool des Netzbetreibers zu, oder er verwendet eine private IP-Adresse (RFC 1918), beispielsweise wenn IP-Server im eigenen Netz adressiert werden.
Diese Funktionalität ist beispielsweise bei WAP-Betrieb üblich (Wireless Application Protocol). Die Notwendigkeit der öffentlichen IP-Adressen ist in TCP/IP, Dr. Sidnie Feit, McGraw-Hill, ISBN 0-07-022069-7, an s. 101 beschrieben.

Das Notebook (NB) ist optional und ermöglicht die Verwendung einer standardisierten Personal Computer- (PC) Umgebung mit Betriebssystem, Browser, Client Software etc. im Anschluss an beispielsweise das öffentliche Internet.

Sind länger bestehende Sessions erforderlich (z.B. Always connect/Always on-Betrieb), dann kann aufgrund der knappen Ressource "Öffentliche IP-Adresse" keine öffentliche IP-Adresse während der gesamten Zeit bereitgestellt werden. Abhilfe schafft beispielsweise NAT (Network Address Translation), wahlweise mit PAT (Port Address Translation, gemäß RFC 1631 u. 2663) bzw. der Einsatz von Application Gateways (AG) oder Proxy-Lösungen (HTTP, TCP/IP, Dr. Sidnie Feit, McGraw-Hill, ISBN 0-07-022069-7,S. 670).

Diese Verfahren nutzen Timesharing oder Multiplexverfahren von IP-Adressen.
Netzintern werden dabei private IP-Adressen verwendet, netzextern hingegen öffentliche IP-Adressen. Die Umsetzung erfolgt im AN (hier stellvertretend für AN und/oder GGSN).

Ein Teil der beschriebenen Funktionalität kann alternativ zum GGSN auch in einem separaten Access Network (AN) angeordnet sein, dass innerhalb oder außerhalb des eigentlichen GPRS Netzwerkes angesiedelt ist. Diese Anordnung erlaubt ggf. mehr Flexibilität und zusätzliche Funktionalität. Hier kann beispielsweise auch ein Firewall mit Schutzfunktion und/oder eine Serverfarm etc. installiert sein.

Im folgenden steht der Ausdruck Access Network AN als Stellvertreter für die Funktionalität der Adresskonvertierung, unabhängig davon, in welcher Komponente die Transformation technisch tatsächlich realisiert ist.

Die Überwachungsmaßnahmen für das gesamte Netz werden im ICC (Interception Control Center) administriert. Dort wird insbesondere eine Liste der Subscriber (Teilnehmerrufnummern/Warrants) gepflegt, die der Maßnahme jeweils aktuell unterliegen. Diese Teilnehmerdaten werden in Form der Rufnummern (Im GSM-Netz die IMSI oder MSISDN) zu den Netzknoten übertragen (MSC/SGSN). Danach werden die betreffenden Teilnehmer automatisch endgerätenah überwacht. Jeglicher Verkehr, der zum/vom Teilnehmer durch den Vermittlungsknoten transportiert wird, wird kopiert und über das ICC zum Bedarfsträger (LEA/ Law Enforcement Agency) übermittelt. Das ICC steht dabei synonym auch für die Übermittlung des Verkehrs zum LEA.
Die technische Realisierung kann bedarfsweise eine unmittelbare Übertragung bestimmter Daten seitens einiger oder mehrerer Netzknoten zum LEA (oder mehreren Leas) vorsehen, wenn dadurch Übertragungskosten gespart werden. Der Vorgang wird jedoch stets vom ICC administriert (ggf. vom LEA über das ICC). Zur Vereinfachung der Erläuterungen wird im weiteren Text von einer beiderseitigen Kommunikation über das ICC ausgegangen. Die Vereinfachung steht dabei stellvertretend auch für alle administrierten Sonderübertragungen.

Alternativ zur IMSI/MSISDN können bei anderen Datennetzen, beispielsweise dem Internet, andere Subscriber-Kennungen wie beispielsweise die TCP-Adresse (optional in Kombination mit der IP-Port-Nummer) verwendet werden.

Bei dieser Verfahrensweise können beliebige netzinterne Teilnehmer überwacht werden. Es ist, wie bereits erläutert, jedoch nicht möglich, netzinterne Teilnehmer aktuell oder nachträglich zu ermitteln (zurück zu verfolgen) die eine Kommunikationsverbindung (Session o.ä.) zu einer netzexternen Stelle OS unterhalten und dabei netzintern keiner Überwachung unterliegen.

Die netzexternen Kommunikationsmerkmal (IP-Adresse, die TCP-Port-Adresse, Proxy- Session-Kennung auf Applikationsebene etc.). können in der Regel seitens ICC weder aktuell abgefragt, noch nachträglich ermittelt werden, da im Netz keine Zuordnungstabelle mit diesen Werten zu der intern verwendeten IP-Adresse und wiederum zu der Teilnehmerkennung (Rufnummer) vorhanden ist und auch nicht mit Uhrzeit und Datum versehen, gespeichert wird.

Zudem werden die externen Access-Parameter bei NAT und/oder Proxy-Betrieb im zeitlichen Verläuf dynamisch geändert, was erschwerend hinzu kommt.
Die gleiche Observierungslücke kann auch bei netzinternem Datenverkehr vorhanden sein (Mobile-to-Mobile), wenn auch die interne IP-Adresse dynamisch zugeordnet ist (das dürfte der Regelfall sein).

Im weiteren Text wird davon ausgegangen, dass das Auskunfsersuchen im ICC bearbeitet wird, da an diesem Ort besonders qualifiziertes und vereidigtes Personal vorhanden ist und besondere Sicherheitsvorkehrungen getroffen sind, um die Datenschutzanforderungen zu erfüllen. Diese vereinfachende Annahme beinhaltet auch technische Alternativen, wie beispielsweise ein separates Auskunftszentrum.

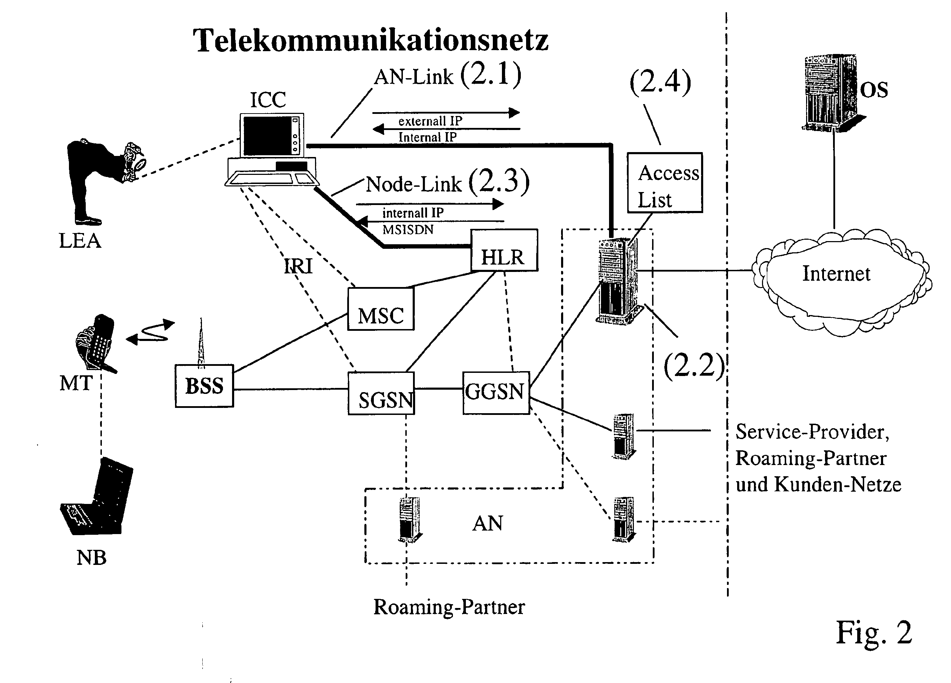

Fig. 2 zeigt eine erfindungsgemäße Verfahrensweise zur Behebung der Nachteile.

Diese Verfahrensweise ist geeignet, um Auskunftsersuchen von bestehenden Kommunikationsverhältnissen unter wirtschaftlichen Gesichtspunkten zu ermöglichen.

Im ICC wird eine Abfrage zu der/den betreffenden Netzknoten bzw. technischen Einrichtungen gestartet, die an der Kommunikationsbeziehung eines Teilnehmers (MT) in der Art beteiligt sind, dass dort kennzeichnende Merkmale der jeweiligen Verbindung verwaltet und bedarfsweise gespeichert werden.

Im Einzelfall können dies unterschiedliche Komponenten sein, je nach technischer Implementierung. Beispielsweise kann das AN (2.2) die Parameter Interne IP-Adresse und zugehörige externe IP-Adresse (Access-Daten) beinhalten (2.4), während im Home Location Register HLR die Teilnehmerkennung (Rufnummer MSISDN) sowie die fest zugeordnete interne IP-Adresse gespeichert ist. In diesem Fall erfolgt beispielsweise eine erste Abfrage (2.1) zwecks Ermittlung der internen IP-Adresse auf Basis der bekannten externen IP-Adresse und anschließend eine HLR-Abfrage (2.3) zur Ermittlung der Teilnehmer-Rufnummer (MSISDN) auf der Basis der internen IP-Adresse.

In einem alternativen Fall kann beispielsweise die Zuordnung einer internen dynamischen IP-Adresse zu einer Teilnehmerkennung im GGSN vorgenommen werden. Dann muss die MSISDN oder eine vergleichbare Kennung (z.B. IMSI o.ä.) auf Basis der aus dem AN bekannten internen IP-Adresse (2.1) mittels Abfrage aus dem GGSN ermittelt werden.

Da die kennzeichnenden Merkmale einer Verbindung während der gesamten Verbindung bekannt sein müssen (dies beinhaltet auch dynamische Änderungen während der Verbindung), sind die jeweils aktuellen Parameter zumindest während der Verbindung temporär in den betreffenden Netzeinrichtungen gespeichert.

Ein drittes Beispiel liegt vor, wenn die Adresskonvertierung auch im GGSN vorgenommen wird, dann reicht optional eine einzige Abfrage, da eine Zuordnungsliste externe IP-Adresse, interne IP-Adresse und MSISDN in einem Netzknoten vorhanden sind.

Diese Beispiele beschreiben unterschiedliche Realisierungsvarianten, die alle auf dem Grundsatz beruhen, dass die an der Konvertierung von Adressierungsinformationen beteiligten Netzkomponenten , jeweils automatisch eine aktuelle Zuordnungstabelle aller Teilnehmer (MT) pflegen, die von externer Stelle (beispielsweise ICC) automatisch oder manuell abgefragt werden kann. Eine zentrale Lösung besteht in diesem Sinne darin, dass eine zentrale Instanz alle betreffenden Daten aller Teilnehmer des Kommunikationsnetzes dynamisch verwaltet, und diese Daten optional automatisch netzweit einsammelt oder zugestellt bekommt, soweit nicht alle erforderlichen Daten in diesem zentralen Knoten präsent sind.

Eine weiterhin optionale Verfahrensweise ist gegeben, wenn die betroffenen Netzknoten die erforderlichen Informationen präventiv sammeln, indem alle relevanten Informationen zu einem zentralen Knoten, einer zentralen Datenbank, oder dem ICC versenden, wobei das ICC die Abfrage zwecks Rückverfolgung von Kommunikationsbeziehungen auf einen einzigen Knoten oder alternativ die eigene Datenbank, bzw. einen eigenen Speicher konzentrieren kann, oder wiederum optional das ICC selbst diese zentrale Sammelstelle darstellt.

Die aufgeführte Verfahrensweise ermöglicht bei unterschiedlicher technischer Ausgestaltung die Ermittlung bestehender Kommunikationsbeziehungen, bzw. der beteiligten Kommunikationspartner.

Was auf dieser Basis jedoch immer noch nicht möglich ist, ist die nachträgliche Ermittlung von Kommunikationsbeziehungen.
Um dies zu gewährleisten, ist es erforderlich, dass die erforderlichen Parameter in einer Datenbank bzw. Datei unter zusätzlicher Komplettierung um zumindest die Parameter Uhrzeit und Datum erfasst und für den späteren Zugriff zumindest zeitweise archiviert werden.

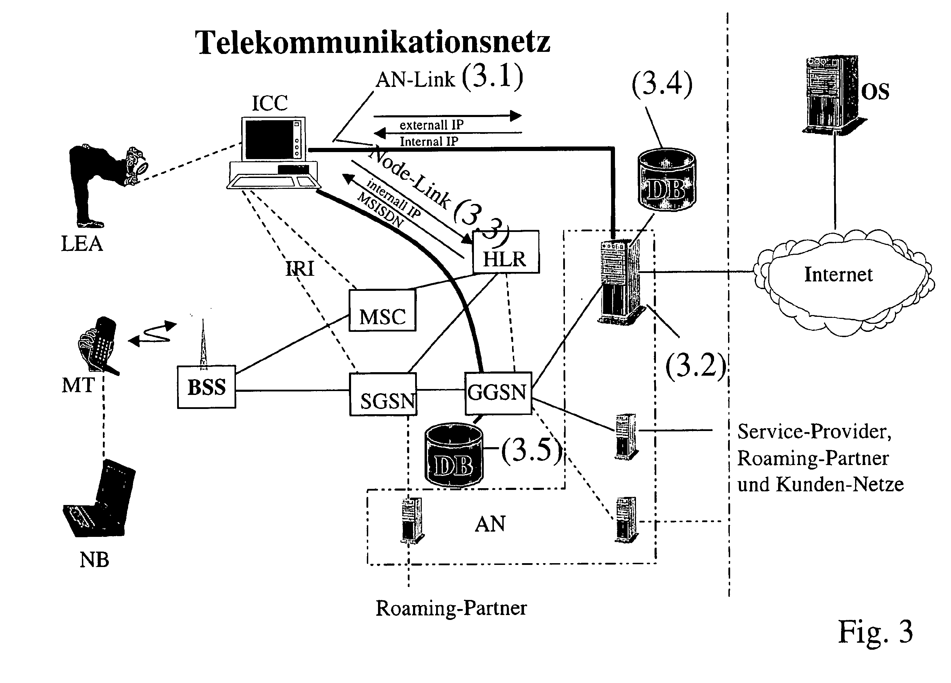

Fig. 3 zeigt eine verbesserte erfindungsgemäße Lösungsvariante.

In diesem Fall wird die interne IP-Adresse auf Basis der bekannten externen IP-Adresse beim AN (3.2) erfragt (3.1), wobei das AN über eine Datenbasis DB (3.4) verfügt. Hier sind zusätzlich Datum und Uhrzeit als Erweiterung der Paramertsätze gespeichert.
Bei diesem Beispiel wird netzintern keine feste, sondern eine dynamische IP-Adresse zugeordnet, die im GGSN, ebenfalls in einer Datenbank (3.5), abgelegt ist (ebenfalls um Datum und Uhrzeit ergänzt). Die Abfrage erfolgt im zweiten Schritt (3.3)

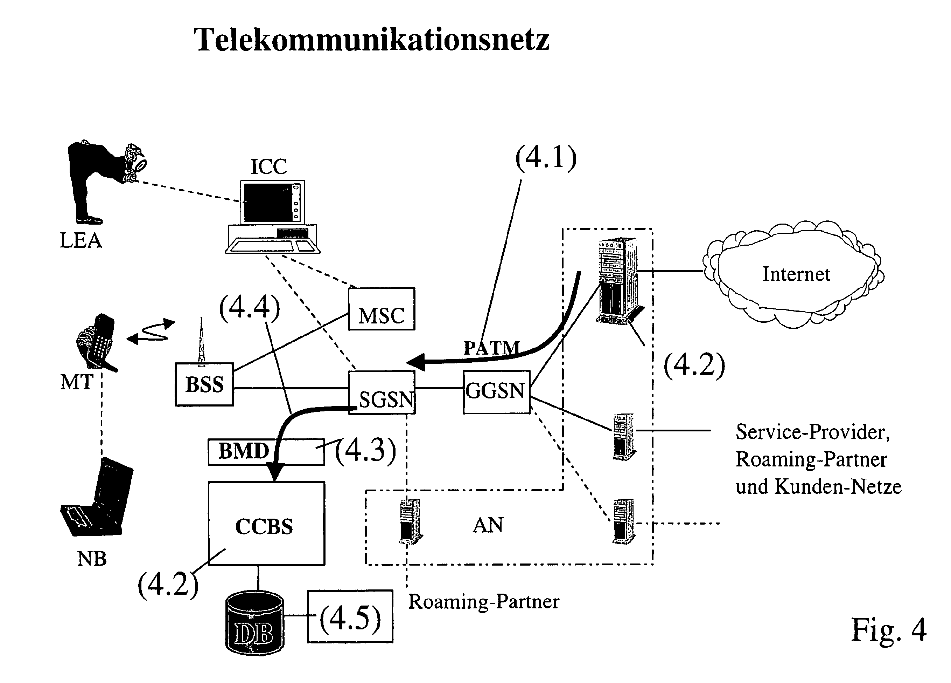

Fig. 4 zeigt eine alternative erfindungsgemäße Lösungsvariante, die sehr ökonomisch ausgeführt werden kann.
Hier entfallen die AN-Verbindungen zum ICC, die Datenbanken sowie Datum- und Uhrzeit-Funktion in den Netzknoten (AN).

Als speichernde Komponente für die dynamischen Access-Parameter wird bei dieser Realisierungsvariante das Billing-System verwendet (Customer Care & Billing System CCBS), da dieses in der Regel sowieso über umfangreiche vorhandene Datenbanken verfügt, die für die hier beschriebene Anwendung sinngemäß erweitert werden. Insbesondere ist in der Regel bereits eine Parametrisierung bez. genauem Datum und Uhrzeit vorhanden und muss für die erfindungsgemäßen Zwecke nicht zusätzlich implementiert werden. Sie kann mitgenutzt werden. Datum und Uhrzeit sind in der Regel für die Erstellung eines detaillierten Gebührennachweises vorhanden. Ebenfalls vorhanden sind bei dieser Einrichtung in der Regel umfangreiche Retrivel-Einrichtungen für die Datenbanken sowie gesicherte professionelle Backup-Systeme, um gebührenrelevante gespeicherte Daten nachträglich rekonstruieren zu können. All diese Einrichtungen können sinnvoll mitgenutzt werden, wenn die erfindungsgemäßen Verbindungsparameter als zusätzliche Parameter zu den abgespeicherten Gebührendaten gespeichert werden. Weiterhin ist in aller Regel ein Löschverfahren vorhanden, wonach Datensätze, die ein bestimmtes Alter erreicht haben, aus Datenschutzgründen automatisch gelöscht werden. Auch diese Einrichtung kann im vorliegenden Fall mitgenutzt werden.

Das CCBS (4.2) ist beispielsweise mittels Billing Mediation Device (BDM 4.3) an den Netzknoten SGSN angeschlossen.
Im Falle einer Adresstransformation speichert der durchführende Netzknoten (AN 4.2) die Werte in einer Tabelle oder Datenbank ab und sendet unmittelbar die betreffenden Parameter, die die Kommunikation bestimmen (hier beispielsweise dynamische IP-Adresse, Port-Adresse, Session-Kennung, Timeout etc. im Internet) mittels einer Public Address Transmission Message PATM (4.1) an das CCBS (4.2) .

Je nach Ausführungsart wird die Information direkt an das CCBS gesandt oder in einem Netzknoten (hier SGSN) extrahiert und zum CCBS übertragen, bzw. im Netzknoten extrahiert und dort in ein vorhandenen Billing-Protokoll als zusätzliche Information eingetragen, welches zum CCBS übertragen wird.
Besondere Vorteile bestehen darin, wenn die Nachricht vom AN zum MT gesandt wird, da im Falle einer Überwachungsmaßnahme diese Information zusammen mit allen anderen teilnehmerspezifischen Daten im SGSN kopiert zum ICC verschickt werden, ohne dass eine Sonderbehandlung für die PATM erforderlich ist. Zusätzlich steht die PATM im MT für unterschiedliche Anwendungen optional zur Verfügung.

Aktuelle Verbindungsdaten für bestehende Überwachungsfälle liegen bei dieser Realisierung bereits im ICC vor, zurückliegende Daten und Daten anderer Teilnehmen können unter Verwendung der CCBS-Datenbank (4.5) recherchiert werden.

Auf diese Art und Weise ist garantiert, dass alle erforderlichen Informationen automatisch und unmittelbar stets aktuell übertragen werden, wobei keine zusätzlichen Leitungsverbindungen zwischen ICC und AN, keine Zusatzmaßnahmen im ICC und nur ein geringer Aufwand im AN betrieben werden muss.

Der SGSN muss die PATN seiner zugeordneten Teilnehmer erkennen, die Adressierungsinformation extrahieren und an das CCBS senden. Dies ist mit geringem Aufwand möglich, da der SGSN sowieso teilnehmerspezifische Daten für das CCBS sammelt und die PATM leicht an Protokolltyp und Teilnehmeradresse erkennen kann.

Als PATM bietet sich beispielsweise die Verwendung einer bereits bekannten Protokollkomponente im IP-Protokoll an, die im Regelfall im MT nicht benötigt wird und dort keine funktionale Reaktion auswirkt. Nutzbare Beispiele dafür sind Messages aus dem Internet Control Message Protocol ICMP (Ping Echo Message, Information oder Jet Unassigned) oder beispielsweise einem Router-Protokoll (z.B. Open Shortest Path First- Hello-Message,). Die Informationsfelder müssen gemäß den zu übertragenden Adressierungsinformationen gestaltet werden.

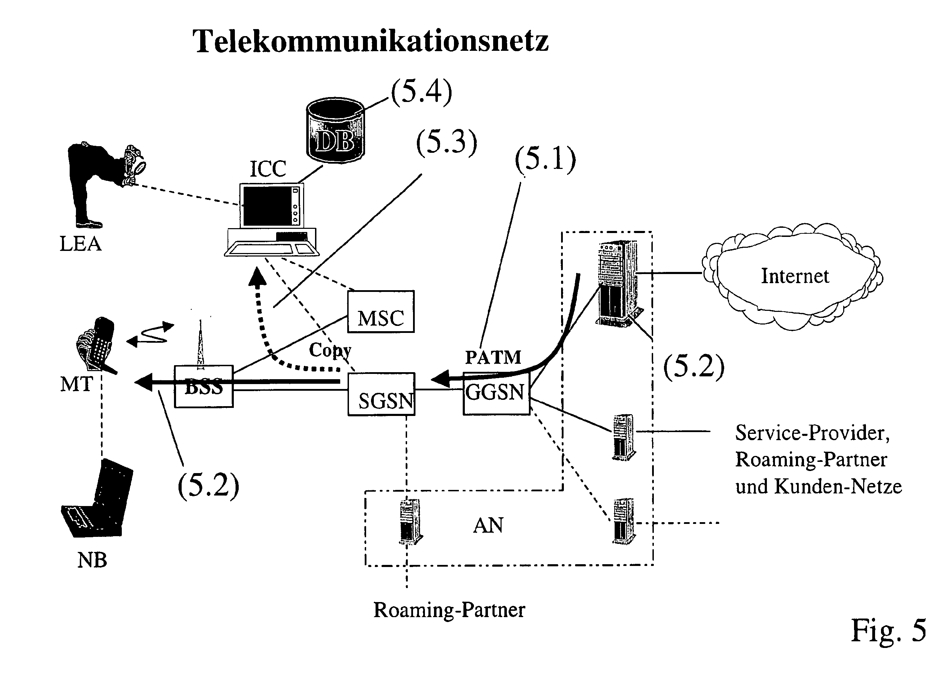

Fig. 5 zeigt eine weitere alternative erfindungsgemäße Lösungsvariante.

Die Kommunikation mittels PATM ist vergleichbar Fig.4. Hier kopiert allerdings der SGSN die Nachricht und sendet alle PATM aller zugeordneten Teilnehmer als Kopie zum ICC. Der Bearbeitungsaufwand ist in diesem Fall besonders gering, da der SGSN die betreffenden Nachrichten lediglich erkennen und teilnehmerunabhängig um ein Adressfeld erweitert zum ICC senden muss.
In diesem Fall beinhaltet das ICC eine entsprechende Datenbank (5.4) mit den gesammelten Datensätzen für Auskunftsersuchen. Dies ist von Vorteil, da nicht auf das Betriebspersonal des CCBS zurückgegriffen werden muss. Andererseits sind Auskunftsersuchen wesentlich schneller zu beantworten, da die ICC-Datenbank für diesen Zweck optimiert sein kann. Zusätzlich besteht die Möglichkeit, diese Daten zu den betreffenden LEAS auf elektronischem Weg zu übertragen. Datum und Uhrzeit wird bei dieser Realisierunsvariante optional und vorzugsweise im ICC ergänzt.

Diese Realisierungsvariante kann dahingehend erweitert werden, dass die Abfrage von zurückliegenden Kommunikationsverbindungen (Auskunftsersuchen) optional über die XO_l-Schnittstelle durch den/die LEA/LEAs erfolgen kann, wenn die XO_1-Schnittstelle demgemäß erweitert wird.

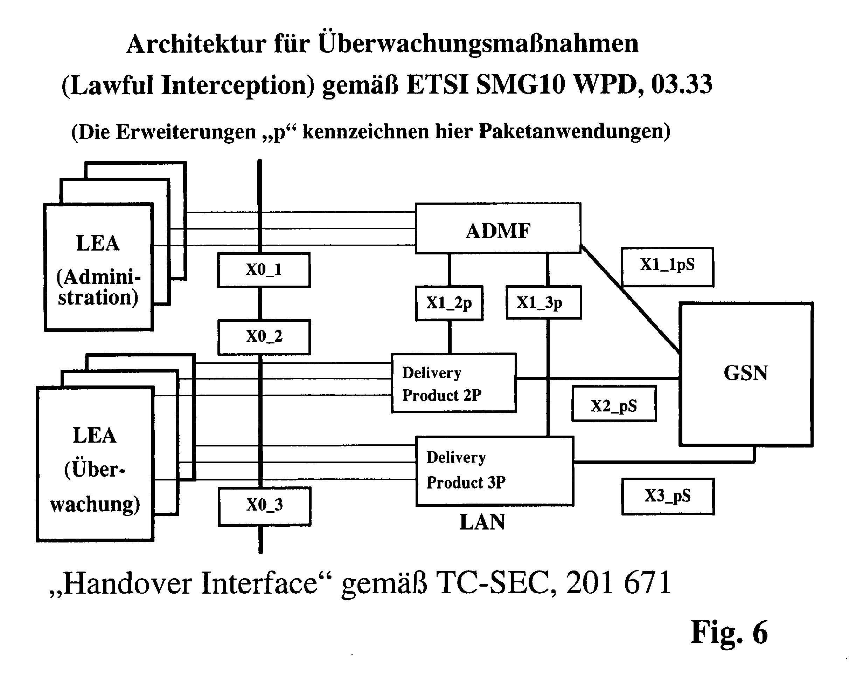

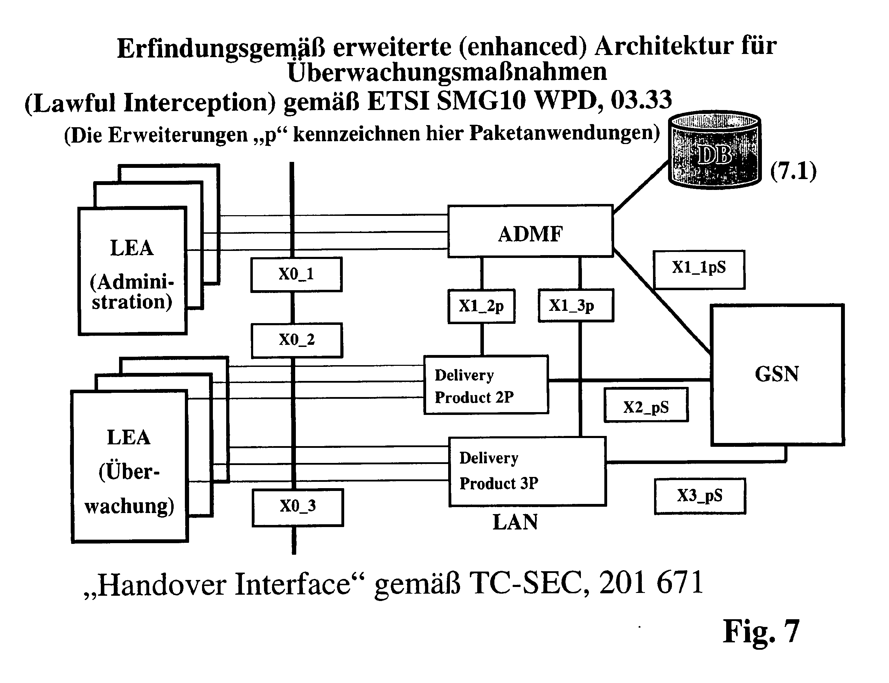

Fig. 6 zeigt das derzeitige Schema der ICC-LEA Verbindung im GSM-Netz (hier mit GPRS-Dienst, gekennzeichnet durch den Netzknoten GSN). Fig 7 zeigt die erfindungsgemäße Erweiterung (7.1) der Referenzkonfiguration für diesen Zweck.

### Zeichnungen und Anlagen

- Fig. 1:: Bekannte Netz- und Interception-Architektur im GSM/GPRS-Netz
- Fig. 2:: Erfindungsgemäße Überwachung/Rückverfolgung für aktuelle Maßnahmen
- Fig. 3:: Erfindungsgemäße Überwachung Rückverfolgung für aktuelle und zurückliegende Maßnahmen
- Fig. 4:: Erfindungsgemäße Überwachung Rückverfolgung für aktuelle und zurückliegende Maßnahmen (alternative Realisierungsvariante)
- Fig. 5:: Erfindungsgemäße Überwachung Rückverfolgung für aktuelle und zurückliegende Maßnahmen (alternative Realisierungsvariante)
- Fig. 6:: Architektur für Überwachungsmaßnahmen (Lawful Interception)gemäß ETSI
- Fig. 7:: Erfindungsgemäß erweiterte (enhanced) Architektur für Überwachungsmaßnahme (Lawful Interception) gemäß ETSI

### Abkürzungen

- AN: Access Network
- ADMF: Administration Function
- AG: Application Geteway
- BSS: Base Station Subsystem
- BDM: Billing Mediation Device
- CCBS: Customer Care & Billing System
- DB: Datenbasis
- ETSI: European Telekommunications Standards Institute
- GGSN: Gateway GPRS Support Node
- GPRS: General Packet Radio System
- GSM: Global System for Mobile Communications
- HLR: Home Location Register
- HSCSD: High Speed Ciriquit Switched Data (ein Verfahren in GSM)
- ICC: Interception Control Center
- ICMP: Internet Control Message Protocoll
- IETF: Internet Engineering Task Force
- IEFT: Internet Engineering Task Force (Standardisierungskremium)
- IMS: International Mobile Subscriberidentity (internationale Kennung)
- IP: Internet Protocoll
- ISP: Internet Service Provider
- LEA: Law Enforcement Agency
- LI: Lawful Interception
- MSC: Mobile Switching Center
- MSISDN: Mobile Station Integrated Services Digital Number (Telefonnummer)
- MT: Mobile Terminal
- NAT: Network Address Translation
- NB: Notebook
- OS: Observed Station
- PAT: Port Address Translation
- PATM: Publick Address Tranmission Message
- PC: Personal Computer
- PDP: Packet Data Protocoll
- RADIUS: Remote Access Dial in User Service
- RAS: Remote Access
- RFC: Request for Comments (Standardisierungspapier der IETF)
- SGSN: Switching GPRS Support Node
- TCP/IP: Transmission Control Protocol/Internet Protocol
- WAP: Wireless Application Protocol

Lit 1: TCP/IP, Dr. Sidnie Feit, McGraw-Hill, ISBN 0-07-022069-7, S185
Lit 2: S. 240
Lit 3: ETSI TC Security Group, 201 671

## Patentansprüche

1. Verfahren zur Durchführung von Überwachungsmaßnahmen und Auskunftsersuchen in Telekommunikations- und Datennetzen, in denen Adressierungs- und Kommunikationsparameter die Herstellung und Aufrechterhaltung einer netzinternen oder netzexternen Kommunikation übernehmen und Adresskonvertierungseinrichtungen die Adressumsetzung oder eine Zuteilung von netzinternen oder netzexternen dynamischen Adressierungsdaten zu netzinternen Kommunikationsteilnehmern oder netzexternen Kommunikationsteilnehmern oder -einrichtungen übernehmen, wobei die in den Adresskonvertierungseinrichtungen (AN) aktuell erzeugten Adressierungs- und Kommunikationsparameter unter Hinzufügung von Zuweisungsparametern als Datensätze abgespeichert werden,
**dadurch gekennzeichnet, dass** die Datensätze durch die aktuelle Uhrzeit und das Datum als Zuweisungsparameter ergänzt werden.

2. Verfahren nach Anspruch 1, **dadurch gekennzeichnet, dass** die Datensätze in den jeweiligen Adresskonvertierungseinrichtungen (AN) abgespeichert werden.

3. Verfahren nach Anspruch 1, **dadurch gekennzeichnet, dass** die Datensätze in einer zentralen Speichereinrichtung abgespeichert werden

4. Verfahren nach Anspruch 3, **dadurch gekennzeichnet, dass** die zentrale Speichereinrichtung (CCBS) netzintern ist.

5. Verfahren nach Anspruch 3, **dadurch gekennzeichnet, dass** die zentrale Speichereinrichtung (ICC) netzextern ist.

6. Verfahren nach Anspruch 3, **dadurch gekennzeichnet, dass** sich die zentrale Speichereinrichtung im Kundenbetreuungs- und -rechungssystem (CCBS) befindet.

7. Verfahren nach Anspruch 3, **dadurch gekennzeichnet, dass** sich die zentrale Speichereinrichtung im Überwachungszentrum (ICC) befindet.

8. Verfahren nach einen oder mehreren der vorhergehenden Ansprüche, **dadurch gekennzeichnet, dass** bestehende Übertragungskanäle zwischen der netzinternen zentralen Speichereinrichung (CCBS) oder den netzexternen Speichereinrichtungen (ICC) und einer oder mehreren Adresskonvertierungseinrichtungen (AN) für die Übertragung verwendet werden.

9. Verfahren nach einen oder mehreren der vorhergehenden Ansprüche, **dadurch gekennzeichnet, dass** separate Übertragungsleitungen zwischen der netzinternen zentralen Speichereinrichung (CCBS) oder den netzexternen Speichereinrichtungen (ICC) und einer oder mehreren Adresskonvertierungseinrichtungen (AN) für die Übertragung verwendet werden.

10. Verfahren nach einen oder mehreren der vorhergehenden Ansprüche, **dadurch gekennzeichnet, dass** die Datensätze einzeln übertragen werden.

11. Verfahren nach einen oder mehreren der vorhergehenden Ansprüche, **dadurch gekennzeichnet, dass** die Datensätze in Sammellisten übertragen werden.

12. Verfahren nach einen oder mehreren der vorhergehenden Ansprüche, **dadurch gekennzeichnet, dass** die Sammellisten die Datensätze eines Kommunikationsteilnehmers oder einer -einrichtung enthalten.

13. Verfahren nach einen oder mehreren der vorhergehenden Ansprüche, **dadurch gekennzeichnet, dass** die Sammellisten die Datensätze mehrere Kommunikationsteilnehmer oder -einrichtungen enthalten.

14. Verfahren nach einen oder mehreren der vorhergehenden Ansprüche, **dadurch gekennzeichnet, dass** die Speichereinrichtungen. (CCBS oder ICC) nach verschiedenen Kriterien abgefragt werden können.

15. Verfahren nach einen oder mehreren der vorhergehenden Ansprüche, **dadurch gekennzeichnet, dass** die Adresskonvertierungseinrichtungen (AN) automatisch jede Adresskonvertierung selbst abspeichern oder an die zentrale Speichereinrichtung (CCBS oder ICC) übertragen

16. Verfahren nach einen oder mehreren der vorhergehenden Ansprüche, **dadurch gekennzeichnet, dass** die Adresskonvertierungseinrichtungen (AN) die Adressierungs- und Kommunikationsparameter an einen zuständigen Netzkonten senden, der diese Parameter für die zentralen Speichereinrichtungen aufbereitet und weiterleitet

17. Verfahren nach einen oder mehreren der vorhergehenden Ansprüche, **dadurch gekennzeichnet, dass** der jeweilige Netzknoten die Parameter an eine mobile Abfrageeinrichtung (MT) ausgibt, die gleichzeitig ein Teilnehmer der zu überwachenden Kommunikationsverbindung sein kann, und gleichzeitig eine Kopie der Datensätze an die zentrale Speichereinrichtung (CCBS oder ICC) weiterleitet.

18. Verfahren nach einen oder mehreren der vorhergehenden Ansprüche, **dadurch gekennzeichnet, dass** die in den netzinternen Speichereinrichtungen (CCBS) bereits vorhanden Einrichtungen zur Protokollierung von Uhrzeit und Datum mit genutzt werden und alle Datensätze dort abgespeichert werden.

19. Verfahren nach einen oder mehreren der vorhergehenden Ansprüche, **dadurch gekennzeichnet, dass** die abfrageoptimierte netzexterne Speichereinrichtung (ICC) nur über gesicherte Übertragung von einem oder mehreren abfrageberechtigten Stellen (LEA) abgefragt werden kann.

20. Verfahren nach einen oder mehreren der vorhergehenden Ansprüche, **dadurch gekennzeichnet, dass** die Verbindung der abfrageberechtigten Stelle (LEA) über eine X0-1-Schnittstelle der Referenzkonfiguration gemäß ETSI TC-SEC, 201 671 um die Funktionalität zum Zugriff auf eine optionale Datenbank (DB) erweitert ist und die Abfragen im Remote-Betrieb möglich sind.

## Claims

1. Method for carrying out supervisory measures and information requests in telecommunications and data networks in which addressing and communications parameters undertake the establishment and maintenance of network-internal or network-external communication, and address conversion devices undertake address conversion or allocation of network-internal or network-external dynamic addressing data to network-internal communications subscribers or network-external communications subscribers or devices, wherein the addressing and communications parameters currently generated in the address conversion devices (AN) are stored with the addition of allocation parameters as data sets, **characterised in that** the data sets are supplemented by the current time and date as allocation parameters.

2. Method according to claim 1, **characterised in that** the data sets are stored in the respective address conversion devices (AN).

3. Method according to claim 1, **characterised in that** the data sets are stored in a central memory device.

4. Method according to claim 3, **characterised in that** the central memory device (CCBS) is internal to the network.

5. Method according to claim 3, **characterised in that** the central memory device (ICC) is external to the network.

6. Method according to claim 3, **characterised in that** the central memory device is located in the central customer service and billing system (CCBS).

7. Method according to claim 3, **characterised in that** the central memory device is located in the supervisory centre (ICC).

8. Method according to one or more of the preceding claims, **characterised in that** existing transmission channels between the network-internal central memory device (CCBS) or the network-external memory devices (ICC) and one or more address conversion devices (AN) are used for transmission.

9. Method according to one or more of the preceding claims, **characterised in that** separate transmission lines between the network-internal central memory device (CCBS) or the network-external memory devices (ICC) and one or more address conversion devices (AN) are used for transmission.

10. Method according to one or more of the preceding claims, **characterised in that** the data sets are transmitted individually.

11. Method according to one or more of the preceding claims, **characterised in that** the data sets are transmitted in consolidated lists.

12. Method according to one or more of the preceding claims, **characterised in that** the consolidated lists contain the data sets of a communications subscriber or device.

13. Method according to one or more of the preceding claims, **characterised in that** the consolidated lists contain the data sets of a plurality of communications subscribers or devices.

14. Method according to one or more of the preceding claims, **characterised in that** the memory devices (CCBS or ICC) can be interrogated according to various criteria.

15. Method according to one or more of the preceding claims, **characterised in that** the address conversion devices (AN) themselves automatically store each address conversion or transmit them to the central memory device (CCBS or ICC).

16. Method according to one or more of the preceding claims, **characterised in that** the address conversion devices (AN) send the addressing and communications parameters to a competent network node which processes these parameters for the central memory devices and passes them on.

17. Method according to one or more of the preceding claims, **characterised in that** the network node in question outputs the parameters to a mobile interrogation device (MT) which may simultaneously be a subscriber of the communications link to be monitored and simultaneously passes on a copy of the data sets to the central memory device (CCBS or ICC).

18. Method according to one or more of the preceding claims, **characterised in that** the devices already present in the network-internal memory devices (CCBS) for logging time and date are also utilised and all data sets are stored there.

19. Method according to one or more of the preceding claims, **characterised in that** the interrogation-optimised network-external memory device (ICC) can be interrogated only via secured transmission from one or more points (LEA) authorised to interrogate.

20. Method according to one or more of the preceding claims, **characterised in that** the connection of the point (LEA) authorised to interrogate via a X0-1 interface of the reference configuration according to ETSI TC-SEC, 201 671 is extended by the functionality for access to an optional database (DB) and the interrogations are possible in remote operation.

## Revendications

1. Procédé pour mettre en oeuvre des mesures de surveillance et effectuer des demandes de renseignement dans des réseaux de télécommunication et de données dans lesquels des paramètres d'adressage et de communication prennent en charge l'établissement et le maintien d'une communication intérieure ou extérieure au réseau, et des dispositifs de conversion d'adresses prennent en charge la conversion d'adresses ou une attribution de données d'adressage dynamiques intérieures ou extérieures au réseau à des participants à la communication intérieurs au réseau ou à des participants à la communication ou dispositifs de communication extérieurs au réseau, les paramètres d'adressage et de communication produits sur le moment dans les dispositifs de conversion d'adresses (AN) étant mis en mémoire sous forme d'enregistrements avec ajout de paramètres d'affectation,
**caractérisé en ce que** les enregistrements sont complétés par l'heure du moment et la date, comme paramètres d'affectation.

2. Procédé selon la revendication 1, **caractérisé en ce que** les enregistrements sont mis en mémoire dans les dispositifs de conversion d'adresses (AN) respectifs.

3. Procédé selon la revendication 1, **caractérisé en ce que** les enregistrements sont mis en mémoire dans un dispositif de stockage centralisé.

4. Procédé selon la revendication 3, **caractérisé en ce que** le dispositif de stockage centralisé (CCBS) est intérieur au réseau.

5. Procédé selon la revendication 3, **caractérisé en ce que** le dispositif de stockage centralisé (ICC) est extérieur au réseau.

6. Procédé selon la revendication 3, **caractérisé en ce que** le dispositif de stockage centralisé se trouve dans le système clientèle et facturation (CCBS).

7. Procédé selon la revendication 3, **caractérisé en ce que** le dispositif de stockage centralisé se trouve dans le centre de surveillance (ICC).

8. Procédé selon l'une au moins des revendications précédentes, **caractérisé en ce qu'**on utilise pour la transmission les canaux de transmission existants entre le dispositif de stockage centralisé intérieur au réseau (CCBS) ou les dispositifs de stockage extérieurs au réseau (ICC) et un ou plusieurs dispositifs de conversion d'adresses (AN).

9. Procédé selon l'une au moins des revendications précédentes, **caractérisé en ce qu'**on utilise pour la transmission des lignes de transmission distinctes entre le dispositif de stockage centralisé intérieur au réseau (CCBS) ou les dispositifs de stockage extérieurs au réseau (ICC) et un ou plusieurs dispositifs de conversion d'adresses (AN).

10. Procédé selon l'une au moins des revendications précédentes, **caractérisé en ce que** les enregistrements sont transmis individuellement.

11. Procédé selon l'une au moins des revendications précédentes, **caractérisé en ce que** les enregistrements sont transmis dans des listes groupées.

12. Procédé selon l'une au moins des revendications précédentes, **caractérisé en ce que** les listes groupées contiennent les enregistrements d'un abonné ou d'un dispositif de communication.

13. Procédé selon l'une au moins des revendications précédentes, **caractérisé en ce que** les listes groupées contiennent les enregistrements de plusieurs abonnés ou dispositifs de communication.

14. Procédé selon l'une au moins des revendications précédentes, **caractérisé en ce que** les dispositifs de stockage (CCBS ou ICC) peuvent être interrogés suivant différents critères.

15. Procédé selon l'une au moins des revendications précédentes, **caractérisé en ce que** les dispositifs de conversion d'adresses (AN) stockent automatiquement chaque conversion d'adresse eux-mêmes ou la transmettent au dispositif de stockage centralisé (CCBS ou ICC).

16. Procédé selon l'une au moins des revendications précédentes, **caractérisé en ce que** les dispositifs de conversion d'adresses (AN) envoient les paramètres d'adressage et de communication à un noeud de réseau compétent qui traite et retransmet ces paramètres pour les dispositifs de stockage centralisés.

17. Procédé selon l'une au moins des revendications précédentes, **caractérisé en ce que** le noeud de réseau respectif envoie les paramètres à un dispositif d'interrogation mobile (MT) qui peut être en même temps un participant à la communication à surveiller, et transmet en même temps une copie des enregistrements au dispositif de stockage centralisé (CCBS ou ICC).

18. Procédé selon l'une au moins des revendications précédentes, **caractérisé en ce que** les dispositifs déjà présents dans les dispositifs de stockage intérieurs au réseau (CCBS) sont utilisés aussi pour consigner l'heure et la date, et tous les enregistrements sont mis en mémoire à cet endroit.

19. Procédé selon l'une au moins des revendications précédentes, **caractérisé en ce que** le dispositif de stockage extérieur au réseau (ICC) à interrogation optimisée ne peut être interrogé par une ou plusieurs instances autorisées à interroger (LEA) que par l'intermédiaire d'une transmission sécurisée.

20. Procédé selon l'une au moins des revendications précédentes, **caractérisé en ce que** la liaison de l'instance autorisée à interroger (LEA) est complétée par l'intermédiaire d'une interface XO-1 de la configuration de référence selon ETSI TC-SEC, 201 671 par la fonctionnalité pour avoir accès à une banque de données optionnelle (DB) et les interrogations sont possibles en mode à distance.
